# EUROPEAN PATENT SPECIFICATION

(11) **EP 0 919 897 B1**
(45) Date of publication and mention of the grant of the patent: **04.02.2004**
(21) Application number: 98830698.1
(22) Date of filing: 20.11.1998
(51) Int. Cl.: G05D 16/06

(54) **A pilot-operated gas pressure regulator with counterbalanced sleeve**
Vorgesteuerter Gasdruckregler mit ausgeglichener Hülse
Régulateur de pression de gaz piloté à manchon équilibré

(30) Priority: 28.11.1997 IT BO970694
(43) Date of publication of application: 02.06.1999
(73) Proprietor: O.M.T. OFFICINA MECCANICA TARTARINI S.p.A., 40013 Castel Maggiore (Bologna) (IT)
(72) Inventor: Tartarini, Roberto, 40013 Castel Maggiore (Bologna) (IT)
(74) Representative: Lanzoni, Luciano

(56) References cited:
- EP-A- 0 683 444
- FR-A- 2 283 483
- FR-A- 2 558 561

## Description

The present invention relates to a pilot-operated gas regulator with counterbalanced sleeve.

At present, gas pressure regulators, also known as gas pressure reducers, with "pilot-operated" gas flow, comprise a single body, usually made by casting and having the flanges for connecting the reducer to the high-pressure gas infeed pipe and to the user-pressure gas delivery pipe.

This body houses the gas pressure regulation devices, such as the sleeves (one or, usually, two opposite one another, of which one is the main regulator and the other, usually known as "monitor" is a safety sleeve that comes into operation in the event of failure of the former) connected to a control head and to corresponding devices (such as the "pilot") to check gas pressure upstream and downstream of the regulator.

Usually (see, for example, patent publication EP 683.444), the above mentioned sleeves are connected to the related control head which is equipped with a diaphragm, the latter being retained on both sides by movable plates and designed to divide the control head into two separate, sealed chambers so as to allow, through the pilot device, the inflow of the reducer drive fluid and the flow of gas at user pressure.

Each sleeve consists basically of at least two elements: a cylinder that moves axially in both directions and a central stem connected at one end to the movable cylinder. The stem has axially fitted to it an assembly consisting of a plate and spring for adjusting the position of the cylinder relative to a sealed stop (called "pad" located opposite the cylinder) in accordance with the pressure in the control head: to achieve this, the other end of the cylinder is connected to the plate and diaphragm assembly.

The stem also has a through duct made in it, one end of the duct leading to an area near the cylinder and the other end leading into a balancing chamber located in the control head at the user-pressure chamber. This duct is used for the high-pressure gas flow designed to balance sudden pressure changes downstream of the reducer that would cause undesired axial movements of the cylinder and, hence, incorrect pressure reduction of the incoming gas.

The structure of this type of reducer is extremely complex, with a high number of large-sized movable parts and with a balancing system which, owing to the small size of the duct in the stem compared to the diameters of the gas passages in the reducer could in some cases be insufficient to keep the position of the sleeve stable in accordance with the pressures in play.

With a view to making the components of gas pressure regulators, especially pilot-operated regulators, simpler and modular, the Applicant has invented and produced a pilot-operated gas pressure regulator as defined in claim 1 with a counterbalanced sleeve that is extremely simple in structure, reliable under steady-state operating conditions and capable of rapidly compensating sudden pressure variations created downstream of the reducer.

The technical characteristics of the invention according to the above mentioned aims are described in the claims below and the advantages of the invention will become more apparent from the detailed description which follows, with reference to the accompanying drawings, which illustrate a preferred embodiment of the invention and in which:
- Figure 1 shows a part of a gas pressure regulator made in accordance with the present invention, viewed in cross section;
- Figure 2 shows another embodiment of the pressure regulator made in accordance with the present invention, viewed in cross section.

With reference to the accompanying drawings, the gas pressure regulator labelled 100 as a whole is of the pilot-operated type.

The regulator comprises a body 1 with an inlet port 2, connected to a first pipe 3, for gas infeed at high pressure or infeed pressure, an outlet port 4 connected to a second pipe 5 (the pipes are drawn with dashed lines in the illustrations) for delivery of gas at user pressure, and at least one pair of auxiliary holes 6 and 7 located opposite each other. Each of the auxiliary holes 6 and 7 has fixed within it auxiliary means 8 for checking and regulating the gas flow (in the drawing only one of the means is shown, since the other is substantially the same, as described in more detail below).

Each of the auxiliary means 8 consists of a sleeve 9, 9' placed partly inside the body 1 and able to move axially along the body (see arrow F1): as is well known, one of the sleeves reduces gas pressure, whilst the other comes into operation only if the former fails. For clarity and convenience, only one of the sleeves will be described here since the structures of the two sleeves are the same.

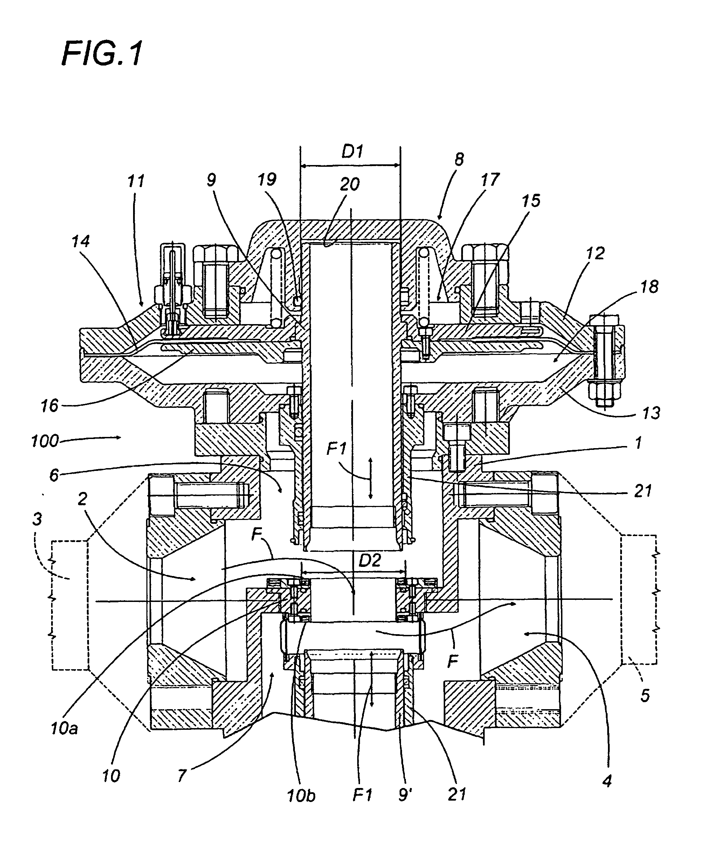

The sleeve 9 is placed opposite a toroidal sealing element 10 forming a passage for the gas flowing through the body 1, said passage being closed or opened by moving the sleeve 9 respectively into contact with the circular edge of, and away from (as illustrated in Figure 1), the toroidal element 10. This passage allows the gas to flow from the first pipe 3 at infeed pressure to the second pipe 5 at user pressure, that is, at reduced pressure (see arrow F in Figure 1).

As is also shown in Figure 1, the sleeve 9 is driven by a control head 11 consisting of two half bodies 12 and 13 flanged to each other and internally separated by a regulator diaphragm 14 retained by corresponding plates 15 and 16 which are, in turn, connected to the sleeve 9.

The assembly consisting of the diaphragm 14 and plates 15 and 16 forms, within the control head 11, corresponding chambers 17 and 18 containing, respectively, the gas at user pressure and a pressure reducing drive fluid supplied by a "pilot" unit (not illustrated because it is of the known type and does not form part of the invention): thanks to this structure, the axial position of the sleeve 9 relative to the toroidal element 10 can be adjusted in accordance with the difference in the pressure of the two chambers 17 and 18.

Still with reference to Figure 1, the sleeve 9 consists of a single cylindrical element open at both ends so as to allow the inflow of gas at infeed pressure and leading into the related control head 11; this structure, combined with the toroidal element 10, forms a sleeve 9 whose action is counterbalanced irrespective of variations in infeed pressure.

The counterbalanced action is also achieved by the fact that the outside diameter D1 of the cylindrical element 9 is constant and equal to the drive diameter D2 of the cylindrical element on the circular sealing portion of the toroidal element 10. This makes it possible to equalize the different opening and closing forces acting on the cylindrical element due to variations in the gas infeed pressure.

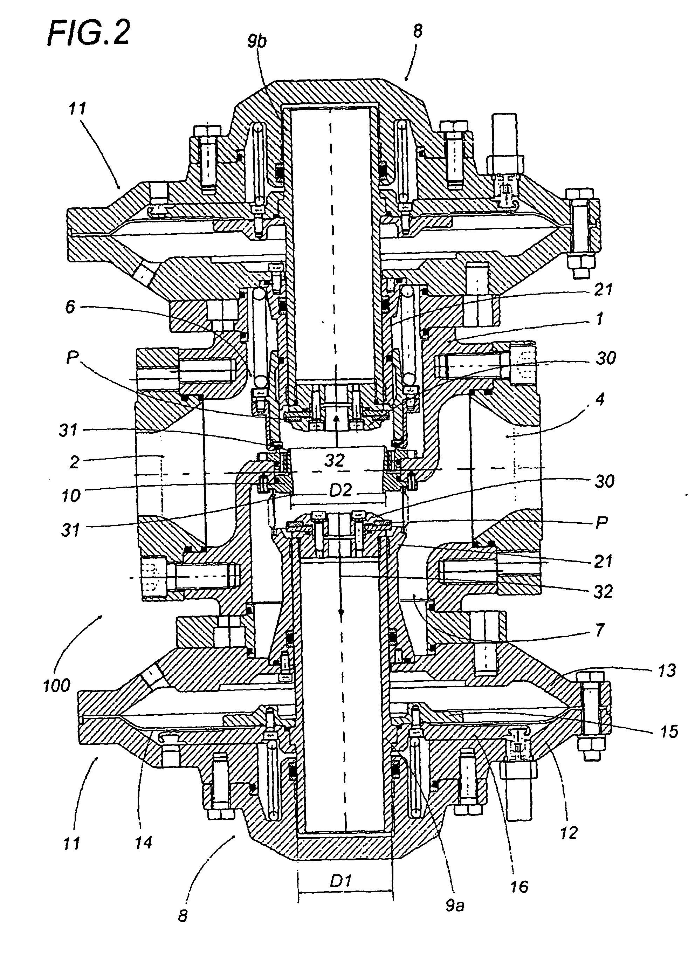

The numeral 19 in Figures 1 and 2 indicates sealing means placed between the cylindrical element 9 and an axial seat 20 in which the cylindrical element is housed. The means 19, which, in this preferred embodiment, consist of a conventional O-RING seal, are placed around the circular edge of the cylindrical element 9 and close to the retaining plates 15 and 16 of the regulator diaphragm. This prevents the inflowing gas from leaking into the chamber 17.

During use, the cylindrical element 9 is surrounded by a second, fixed cylindrical element 21, connected to the control head 11 and protruding from the latter coaxially with the first cylindrical element 9 so as to act as a guide for the first cylindrical element.

Obviously, as shown in Figure 1, if the regulator has two auxiliary means 8, the sleeve 9 described up to now is combined with another sleeve fitted substantially symmetrically at the other auxiliary hole 7 where there is a cylindrical element 9' (illustrated partially), controlled by a similar control head (not illustrated) and placed coaxially opposite the other cylindrical element 9. Hence, the sleeves 9 and 9' are located in opposite sides of the toroidal element 10. Each cylindrical element 9 and 9' therefore acts on a corresponding circular sealing face 10a and 10b of the toroidal element 10.

In the embodiment illustrated in Figure 2, each of the opposite sleeves 9a and 9b envisaged on the regulator is equipped with a pad P mounting head 30 that is screwed onto the free end of the corresponding cylindrical element 9a and 9b, while the toroidal element 10 is simply equipped with ring-shaped stop elements 31 opposite the corresponding pad P.

Configuring the cylindrical elements 9a and 9b in this way does not substantially change the design and operation of the simplified embodiment described above, since the pad P mounting head 30 has a central through hole 32 designed to allow gas to flow into the cylindrical elements 9a and 9b at infeed pressure. Like the simplified embodiment described above, the outside diameter D1 of each cylindrical element 9a and 9b is constant and equal to the drive diameter D2 of the cylindrical element. In this case, the pad P, on the circular edge of the ring-shaped stop element 31. As in the previous case, this makes it possible to equalize the different opening and closing forces acting on the cylindrical element due to variations in the gas infeed pressure.

A sleeve made in this way achieves the above mentioned aims thanks to its simple, economical construction which does not reduce the reliability of the regulator as a whole and appreciably increases its overall efficiency.

The invention described can be subject to modifications and variations.

## Claims

1. A pilot-operated gas pressure regulator comprising a body (1) with an inlet port (2), connected to a first pipe (3), for gas infeed at high pressure or infeed pressure, an outlet port (4) connected to a second.pipe (5) for delivery of gas at user pressure, and at least one pair of auxiliary holes (6, 7) located opposite each other and each having fixed within it auxiliary means (8) for monitoring and regulating the gas pressure; at least one of the auxiliary means (8) consisting of a sleeve (9) protruding partly into and able to move axially within the body (1), one end of the sleeve (9) being located opposite a toroidal valve seat element (10) located in the body (1) and forming a passage for the gas flowing through the body (1), said passage being closed or opened by moving the sleeve (9) respectively into contact with and away from the circular edge of the toroidal valve seat element (10) to allow the gas to flow from the first pipe (3) at infeed pressure to the second pipe (5) at user pressure; said sleeve (9) being driven by the auxiliary means (8) in the form of a control head (11) consisting of two half bodies (12, 13) flanged to each other and internally separated by a regulator diaphragm (14) retained by corresponding plates (15, 16) connected to the sleeve (9) to form corresponding chambers (17, 18) containing, respectively, the gas, at user pressure (17) and a pressure reducing drive fluid (18) supplied by a pilot unit, so as to enable the axial position of the sleeve (9) to be adjusted in accordance with the difference in the pressure of the two chambers (17,18); the regulator being **characterized in that**
the sleeve (9) comprises a cylindrical element open at both ends so as to allow the inflow, into the sleeve (9), of gas at infeed pressure and the leading of said gas into the related control head (11) whereby the sleeve (9) is driven solely via the connection between the plates (15, 16) and the sleeve (9) itself wherein the action of the sleeve (9) in combination with the toroidal valve seat element (10) is counterbalanced irrespective of variations in infeed pressure.

2. The regulator according to claim 1, **characterized in that** the outside diameter (D1) of the sleeve (9) is constant and equal to the drive diameter (D2) of the cylindrical element on the circular sealing portion of the toroidal valve seat element (10).

3. The regulator according to claim 1, **characterized in that** the sleeve (9) is made in one piece.

4. The regulator according to claim 1, **characterized in that** it comprises at least two similar auxiliary means (8) consisting of said sleeves (9, 9') coaxial to and opposite one another and placed on opposite sides of the toroidal valve seat element (10); each sleeves (9, 9') acting on a corresponding circular sealing face (10a, 10b) of the toroidal valve seat element (10).

5. The regulator according to claim 1, **characterized in that** it comprises sealing means (19) between the sleeve (9) and an axial seat (20) in which the cylindrical element is housed; said sealing means (19) being placed around the circular edge of the cylindrical element (9) and close to the retaining plates (15, 16) of the regulator diaphragm.

6. The regulator according to claim 1, **characterized in that** it comprises a second, fixed cylindrical element (21) connected to the control head (11) and protruding from the latter coaxially with the first sleeve (9) so as to act as a guide for the first cylindrical element.

7. The regulator according to claim 1, **characterized in that** the free end of the first sleeve (9a) has a head (30) that mounts a sealing pad (P) designed to come into contact with a corresponding ring-shaped stop element (31) on the toroidal valve seat element (10); the head (30) being screwed onto the sleeve (9a) and equipped with a central through hole designed to allow the gas to flow through at infeed pressure.

## Patentansprüche

1. Vorgesteuerter Grasdruckregler, enthaltend einen Körper (1) mit einer Einlassöffnung (2), angeschlossen an eine erste Rohrleitung (3) zum Zuführen von unter hohem Druck oder Einlassdruck stehenden Gas, eine Auslassöffnung (4), angeschlossen an eine zweite Rohrleitung (5) zur Abgabe von unter Betriebsdruck stehendem Gas, und wenigstens ein Paar von Hilfsbohrungen (6, 7), die gegenüberliegend zueinander angeordnet sind und jeweils in ihrem Inneren Hilfsmittel (8) zur Überwachung und zum Regeln des Gasdruckes aufgenommen haben; wobei wenigstens eins der Hilfsmittel (8) aus einer Hülse (9) besteht, die sich zum Teil in den Körper (1) erstreckt und in der Lage ist, sich axial in diesem zu bewegen, wobei ein Ende der Hülse (9) gegenüberliegend von einem toroidalen Ventilsitzelement (10) angeordnet ist, das sich in dem Körper (1) befindet und einen Durchlass für den Gasstrom durch den Körper (1) bildet, wobei der genannte Durchlass geschlossen oder geöffnet werden kann, und zwar durch die Verschiebung der Hülse (9) jeweils im Kontakt mit oder entfernt von dem kreisförmigen Rand des toroidalen Ventilsitzelementes (10), um es dem Gas zu ermöglichen, von der ersten Rohrleitung (3) bei Einlassdruck an die zweite Rohrleitung (5) bei Betriebsdruck zu strömen; wobei die genannte Hülse (9) durch die Hilfsmittel (8) in Form eines Steuerkopfes (11) betätigt wird, der aus zwei Halbkörpern (12, 13) besteht, die einer an dem anderen angeflanscht und innen durch eine Regelmembrane (14) voneinander getrennt sind, gehalten von entsprechenden, an die Hülse (9) angeschlossenen Platten (15,16), um entsprechende Kammern (17, 18) zu bilden, jeweils enthaltend das Gas bei einem Betriebsdruck (17) und ein druckreduzierendes Antriebsfluid (18), geliefert durch eine Steuereinheit, so dass die axiale Position der Hülse (9) je nach dem Druckunterschied zwischen den beiden Kammern (17, 18) eingestellt werden kann; **dadurch gekennzeichnet, dass** die Hülse (9) ein zylindrisches, an beiden Enden offenes Element enthält, so dass das Einströmen des Gases bei einem Einlassdruck in die Hülse (9) erlaubt ist, und das Leiten des genannten Gases in den entsprechenden Steuerkopf (11), wobei die Hülse (9) einzig durch die Verbindung zwischen den Platten (15, 16) und der Hülse (9) selbst betätigt wird, so dass die Wirkung der Hülse (9) in Kombination mit dem toroidalen Ventilsitzelement (10) ausgeglichen ist, unabhängig von den Veränderungen des Einlassdruckes.

2. Regler nach Patentanspruch 1, **dadurch gekennzeichnet, dass** der Aussendurchmesser (D1) der Hülse (9) konstant und gleich dem Antriebsdurchmesser (D2) des zylindrischen Elementes an dem kreisförmigen Dichtungsabschnitt des toroidalen Ventilsitzelementes (10) ist.

3. Regler nach Patentanspruch 1, **dadurch gekennzeichnet, dass** die Hülse (9) in einem Stück gearbeitet ist.

4. Regler nach Patentanspruch 1, **dadurch gekennzeichnet, dass** er wenigstens zwei gleiche Hilfselemente (8) enthält, bestehend aus den genannten Hülsen (9, 9'), koaxial und gegenüberliegend zueinander an entgegengesetzten Seiten des toroidalen Ventilsitzelementes (10) angeordnet; wobei jede der Hülsen (9, 9') auf eine entsprechende kreisförmige Dichtfläche (10a, 10b) des toroidalen Ventilsitzelementes (10) wirkt.

5. Regler nach Patentanspruch 1, **dadurch gekennzeichnet, dass** er Dichtungsmittel (19) zwischen der Hülse (9) und einem axialen Sitz (20) enthält, in welchem das zylindrische Element aufgenommen ist; wobei die genannten Dichtungsmittel (19) um den kreisförmigen Rand des zylindrischen Elementes (9) und dicht an den Halteplatten (15, 16) der Regelmembrane angeordnet sind.

6. Regler nach Patentanspruch 1, **dadurch gekennzeichnet, dass** er ein zweites, feststehendes zylindrisches Element (21) enthält, angeschlossen an den Steuerkopf (11) und sich von letzterem aus koaxial zu der ersten Hülse (9) erstreckend, so dass es als Führung für das erste zylindrische Element wirkt.

7. Regler nach Patentanspruch 1, **dadurch gekennzeichnet, dass** das freie Ende der ersten Hülse (9a) einen Kopf (30) hat, der einen Dichtungstampon (P) trägt, dazu bestimmt, mit einem entsprechenden ringförmigen Anschlagelement (31) an dem toroidalen Ventilsitzelement (10) in Kontakt zu kommen; wobei der Kopf (30) auf die Hülse (9a) aufgeschraubt und mit einer mittleren durchgehenden Bohrung versehen ist, die dazu dient, das Durchströmen des Gases bei Einlassdruck zu erlauben.

## Revendications

1. Un régulateur de pression de gaz piloté comprenant un corps (1) présentant un orifice d'entrée (2) raccordé à un premier conduit (3), pour l'entrée du gaz en question à haute pression ou pression d'entrée, un orifice de sortie (4) raccordé à un second conduit (5), pour la sortie de ce même gaz à la pression de service, et au moins une paire d'ouvertures auxiliaires (6, 7) disposées à l'opposé l'une de l'autre et ayant chacune, fixés à l'intérieur, des moyens auxiliaires (8) pour le contrôle et la régulation de la pression du gaz ; au moins un des moyens auxiliaires (8) étant constitué par un manchon (9) saillant partiellement dans et mobile axialement à l'intérieur du corps (1), une extrémité du manchon (9) étant placée en face d'un élément de siège de vanne toroïdal (10) disposé dans le corps (1) et définissant un passage pour le gaz s'écoulant à travers ce même corps (1), ledit passage étant fermé ou ouvert en amenant le manchon (9) au contact de et, respectivement, en l'éloignant du bord circulaire de l'élément de siège de vanne toroïdal (10) pour permettre au gaz de s'écouler du premier conduit (3) à la pression d'entrée au second conduit (5) à la pression de service ; ledit manchon (9) étant actionné par les moyens auxiliaires (8) consistant en une tête de commande (11) qui comporte deux demi-corps (12, 13) raccordés par bride l'un à l'autre et séparés intérieurement par une membrane régulatrice (14) retenue par des plaques (15, 16) correspondantes associées au manchon (9) pour définir des chambres (17, 18) correspondantes contenant, respectivement, le gaz à la pression de service (17) et un fluide d'actionnement du réducteur de pression (18) alimenté par une unité pilote, de manière à pouvoir régler la position axiale du manchon (9) en fonction de la différence de pression entre les deux chambres (17, 18); ledit régulateur étant **caractérisé en ce que** ledit manchon (9) comprend un élément cylindrique ouvert aux deux extrémités de manière à permettre l'afflux, dans ce même manchon (9), du gaz à la pression d'entrée et le passage de ce même gaz dans la tête de commande (11) correspondante par laquelle le manchon (9) est actionné uniquement via la connexion entre les plaques (15, 16) et le manchon (9) lui-même et en quoi l'action du manchon (9), en combinaison avec l'élément de siège de vanne toroïdal (10), est contre-équilibrée indépendamment des variations de la pression d'entrée.

2. Le régulateur selon la revendication 1, **caractérisé en ce que** le diamètre extérieur (D1) du manchon (9) est constant et égal au diamètre d'actionnement (D2) de l'élément cylindrique sur la portion circulaire d'étanchéité de l'élément de siège de vanne toroïdal (10).

3. Le régulateur selon la revendication 1, **caractérisé en ce que** ledit manchon (9) est réalisé sous forme d'une pièce unique.

4. Le régulateur selon la revendication 1, **caractérisé en ce qu'**il comprend au moins deux moyens auxiliaires (8) similaires consistant en des manchons (9, 9') coaxiaux et opposés l'un à l'autre et disposés sur des côtés opposés de l'élément de siège de vanne toroïdal (10) ; chacun des manchons (9, 9') agissant sur une face circulaire d'étanchéité (10a, 10b) correspondante de ce même élément de siège de vanne toroïdal (10).

5. Le régulateur selon la revendication 1, **caractérisé en ce qu'**il comprend des moyens d'étanchéité (19) entre le manchon (9) et un logement axial (20) dans lequel est logé l'élément cylindrique ; lesdits moyens d'étanchéité (19) étant placés autour du bord circulaire de l'élément cylindrique (9) et à proximité des plaques de retenue (15, 16) de la membrane régulatrice.

6. Le régulateur selon la revendication 1, **caractérisé en ce qu'**il comprend un second élément cylindrique (21), fixe, associé à la tête de commande (11) et dépassant de cette dernière coaxialement au premier manchon (9) de manière à servir de guide pour le premier élément cylindrique.

7. Le régulateur selon la revendication 1, **caractérisé en ce que** l'extrémité libre du premier manchon (9a) est pourvue d'une tête (30) qui supporte un patin d'étanchéité (P) destiné à venir au contact d'un élément annulaire de butée (31) correspondant prévu sur ledit élément de siège de vanne toroïdal (10) ; ladite tête (30) étant vissée sur le manchon (9a) et pourvue d'une ouverture centrale débouchante destinée à permettre au gaz de s'écouler à la pression d'entrée.
